Europäisches Patentamt

European Patent Office

Office européen des brevets

(11) Veröffentlichungsnummer: **0 301 481 B1**

## (12) EUROPÄISCHE PATENTSCHRIFT

(45) Veröffentlichungstag der Patentschrift: **15.04.92**

(21) Anmeldenummer: **88112055.4**

(22) Anmeldetag: **26.07.88**

(51) Int. Cl.⁵: **H04J 3/06**

---

(54) **Synchronisiereinrichtung für einen Digitalsignal-Demultiplexer.**

---

(30) Priorität: **31.07.87 DE 3725477**

(43) Veröffentlichungstag der Anmeldung:
**01.02.89 Patentblatt 89/05**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI NL SE**

(56) Entgegenhaltungen:
**EP-A- 0 091 061**
**EP-A- 0 134 374**

(73) Patentinhaber: **SIEMENS AKTIENGESELL-
SCHAFT
Wittelsbacherplatz 2
W-8000 München 2(DE)**

(72) Erfinder: **Volejnik, Wilhelm, Dipl.-Ing.
Andreasstrasse 9
W-8029 Sauerlach(DE)**
Erfinder: **Magerl, Johann
Sauerbruchstrasse 9
W-8000 München 70(DE)**

## Beschreibung

Die Erfindung bezieht sich auf eine Synchronisiereinrichtung für einen Digitalsignal-Demultiplexer mit einem dem Demultiplexer vorgeschalteten eingangsseitig angeordneten Schieberegister, mit einer an die Stufenausgänge des Schieberegisters angeschlossenen Rahmenkennungswort-Erkennungseinrichtung, mit einem Hilfs-Rahmenzähler, mit einem Haupt-Rahmenzähler und mit einer Synchronisierlogik, die den Hilfs-Rahmenzähler im synchronen Zustand bei jedem empfangenen Rahmenkennungswort setzt und dies bei einem unklaren Zustand fortsetzt, die bei viermaliger Nichterkennung des Rahmenkennungswortes an erwarteter Stelle nach einem Suchlauf den Haupt-Rahmenzähler bei Erkennung eines Rahmenkennungsworts an beliebiger Stelle setzt und die den Demultiplexer nur bei anschließender Nichtübereinstimmung der Zählerstände von Hilfs- und Haupt-Rahmenzählern neu synchronisiert.

Bei Digitalsignal-Multiplexern muß empfangsseitig der ankommende Datenstrom wieder richtig auf die meist vier Kanäle aufgeteilt werden. Hierzu detektiert eine Synchronisierschaltung das im Bitstrom enthaltene Rahmenkennungswort. Nach dessen Auffinden wird ein auf die Rahmenlänge abgestimmter Rahmenzähler gesetzt, worauf dieser seinerseits den Zeitpunkt markiert, zu dem in allen darauffolgenden Rahmen wieder das Rahmenkennungswort erwartet wird. Nach den Empfehlungen des CCITT wird nach einem Erkennen von drei unmittelbar aufeinanderfolgenden Rahmenkennungswörtern Synchronität festgestellt, während nach vier in Folge nicht erkannten Rahmenkennungswörtern ein neuer Synchronisierungsvorgang eingeleitet wird.

Werden durch eine Bündel-Störung (burst) vier aufeinanderfolgende Rahmenkennungswörter nur gestört, wird ebenfalls ein neuer Suchvorgang eingeleitet. Dabei wird der ankommende Datenstrom Bit für Bit abgesucht und der Rahmenzähler auf das erste vorgefundene Rahmenkennungswort eingestellt. Mit hoher Wahrscheinlichkeit handelt es sich dabei um ein im Datenstrom vorgetäuschtes Rahmenkennungwort, und die Zuordnung auf die Kanäle wird solange falsch, bis das richtige Rahmenkennungswort gefunden ist.

Diese Bitfehler-Vervielfachung kann durch eine Anordnung der einleitend geschilderten Art nach der Europäischen Patentanmeldung EP-A-0 091 061 bei einer Bündelstörung verhindert werden: Ein Haupt-Rahmenzähler hält die ursprünglich richtige Position des Rahmenkennungswortes fest und zerlegt den Datenstrom so lange weiter wie bisher, bis der Hilfs-Rahmenzähler seinen neuen Synchronisiervorgang beendet hat. Stimmen dann beide Rahmenzähler überein, weil das Rahmenkennungswort nur gestört aber nicht verschoben wurde, werden keine unnötigen Synchronisiervorgänge ausgelöst und keine zusätzlichen Bitfehler erzeugt.

Diese Anordnung bringt aber dann keinen Gewinn, wenn durch die Störung die Anzahl der von der empfangsseitigen Taktrückgewinnung erkannten Bits zwischen den Rahmenkennungswörtern verfälscht wurde. In diesem wesentlich häufigeren Fall erscheint das nächste und alle weiteren Rahmenkennungswörter nicht mehr zum vorgesehenen Zeitpunkt und es resultiert ein Bitschlupf (bit-slip). Alle nachfolgenden empfangsseitigen Multiplexer werden dadurch ebenfalls asynchron und es beginnt ein lawinenartiger Ab- und Aufsynchronisiervorgang. Selbst ein Bitschlupf von nur einem Bit bewirkt diesen Vorgang.

Ein Bitschlupf, bei dem die Bitzahl in dem betroffenen Rahmen um ein oder mehrere Bits vergrößert oder verringert wird, resultiert aus einer Verfälschung der Datenrate durch Beeinflussung des Leitungssignals mit einer bündelartigen Störspannung oder aus einer Veränderung der Füllinformation durch erhöhte Fehlerraten während eines oder mehrerer Rahmen.

Aufgabe der Erfindung ist es, den Ab- und Aufsynchronisiervorgang beim Auftreten eines Bitschlupfes zu vermeiden.

Ausgehend von einer Synchronisiereinrichtung der einleitend geschilderten Art wird diese Aufgabe erfindungsgemäß dadurch gelöst, daß ein UND-Gatter vorgesehen ist, das mit seinem ersten Eingang und seinem Ausgang in die Steuerleitung zwischen der Synchronisierlogik und dem Haupt-Rahmenzähler eingeschleift ist, daß eine Bitschlupf-Erkennungseinrichtung vorgesehen ist, die von der Synchonisierlogik sowie von dem Hilfs- und dem Haupt-Rahmenzähler gesteuert wird und deren erster Ausgang mit dem zweiten Eingang des UND-Gatters verbunden ist, daß eine Taktfrequenzumschaltung vorgesehen ist, deren Eingang mit einem zweiten Ausgang der Bitschlupf-Erkennungseinrichtung und deren Ausgang mit dem Takteingang des Haupt-Rahmenzählers verbunden sind, und daß eine Taktrückgewinnungseinrichtung vorgesehen ist, deren Eingang mit dem Eingang für das Multiplexsignal und dessen Ausgang mit den Takteingängen der Bitschlupf-Erkennungseinrichtung, des Hilfs-Rahmenzählers und der Taktfrequenzumschaltung verbunden sind.

Mit dieser Synchronisiereinrichtung läßt sich die Anzahl der an die Kanäle abgegebenen Bits bei Bitschlupf wieder auf den Nennwert zurückführen und damit eine Störung der Synchronität der nachfolgenden Systeme vermeiden. Die Korrekturvorgänge werden durch die am Ausgang ohnehin vorhandene PLL (Phase Locked Loop)-Schaltung bis auf langsame, vernachlässigbar kleine Phasenschwankungen geglättet.

Ausgestaltungen der Erfindung sind den Unteransprüchen zu entnehmen.

Anhand eines Ausführungsbeispiels wird die Erfindung nachstehend näher erläutert.

Fig. 1       zeigt Pulsrahmen des Multiplexsignals und Zählerstände des Haupt-Rahmenzählers,

Fig. 2       zeigt eine erfindungsgemäße Synchronisiereinrichtung,

Fig. 3       zeigt eine Bitschlupf-Erkennungseinrichtung,

Fig. 4       zeigt eine Variante der Auswertelogik der Bitschlupf-Erkennungseinrichtung nach Fig. 2,

Fig. 5       zeigt einen Puls mit Frequenzverminderung und

Fig. 6       zeigt einen Puls mit Frequenzerhöhung.

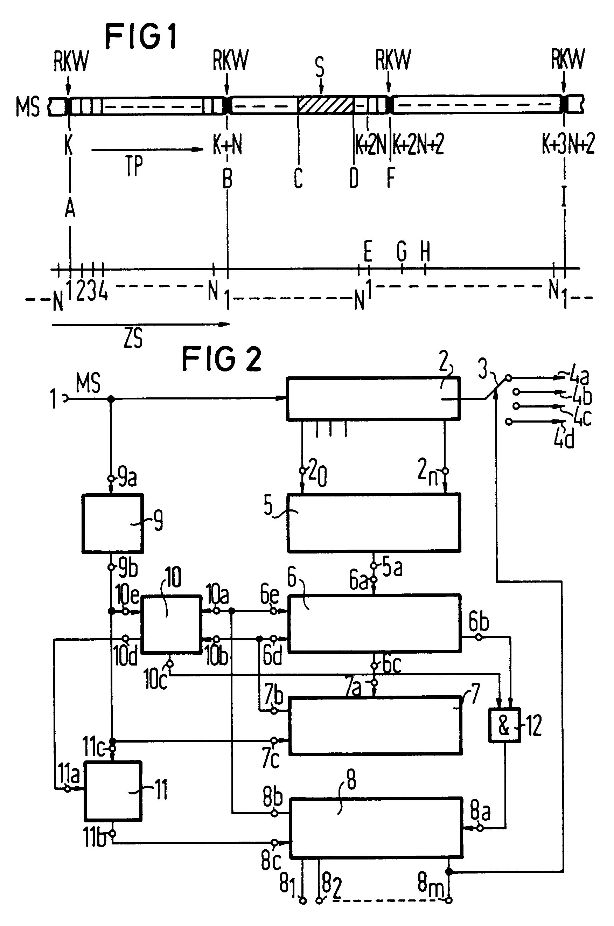

Fig. 1 zeigt in einer oberen Spur den zeitlichen Ablauf eines ankommenden Multiplexsignals MS, wobei die Zahl der Taktperioden TP dieses Signals als Zeitmaßstab gewählt wurde. Die Zeitpunkte, zu denen die Rahmenkennungswörter eintreffen, sind mit RKW markiert. Das schraffierte Feld bezeichnet eine Bündelstörung S. Mit K ist die Anzahl der Bits am Anfang der Spur bezeichnet.

Die untere Spur in Fig. 1 zeigt den zeitlichen Ablauf der Zählerstände ZS des Haupt-Rahmenzählers. Dieser läuft periodisch von 1 bis N, wobei N gleich ist der Bits pro Rahmen. Im ungestörten Betrieb, also im rahmensynchronen Zustand, erfolgt der Zählerdurchlauf durch 1 gleichzeitig mit dem Eintreffen des Rahmenkennungswortes RKW im Multiplexsignal MS. Vom Zeitpunkt A bis zum Zeitpunkt C herrscht ungestörter Betrieb. Anschließend kommt bis zum Zeitpunkt D eine Bündelstörung S an. Für dieses Beispiel wurde angenommen, daß als Folge dieser Bündelstörung S zwei Bits zusätzlich in das Multiplexsignal MS eingefügt wurden. Das Rahmenkennungswort RKW trifft daher um zwei Taktperioden später als erwartet zum Zeitpunkt F ein. Der Haupt-Rahmenzähler, der im normalen Betrieb mit dem Takt des Multiplexsignals MS weitergeschaltet wird, durchläuft im Zeitpunkt E den 1-Stand zwei Takte vor dem tatsächlichen Eintreffen des Rahmenkennungswortes RKW. Unmittelbar nach dem Zeitpunkt F wird durch Vergleich mit dem Stand des Haupt-Rahmenzählers erkannt, daß ein Bitschlupf von zwei zusätzlichen Bits stattgefunden hat. Nun wird zwischen den Zeitpunkten G und H der Takt, der den Haupt-Rahmenzähler und über dessen Taktausgang den Demultiplexer betreibt, relativ zum Takt des Multiplexsignals MS verlangsamt und zwar so lange, bis der treibende Takt um zwei Taktperioden - entsprechend dem Bitschlupf von zwei zusätzlichen Bits - relativ zum Takt des Multiplexsignals MS zurückgeblieben ist. Zum Zeitpunkt H ist der Haupt-Rahmenzähler wieder rahmensynchron mit dem Multiplexsignal MS. Ab diesem Zeitpunkt H wird die Taktverlangsamung aufgehoben und der treibende Takt läuft wieder synchron zum Takt des Multiplexsignals MS.

Zwischen den Zeitpunkten A - I sind $3N + 2$ Bits angekommen, also zwei Bits zu viel. Der Haupt-Rahmenzähler und der Demultiplexer haben jedoch gleichzeitig $3N$ Taktschritte in Übereinstimmung mit dem Sollwert durchlaufen. Somit wurde an die nachfolgenden Untersysteme die genau richtige Anzahl von Bits weitergereicht, wenngleich der Inhalt der Bits zwischen den Zeitpunkten C und H fehlerhaft sein kann. Die Störung ist aber auf diesen Zeitabschnitt beschränkt.

Fig. 2 zeigt die erfindungsgemäße Synchronisiereinrichtung. Sie enthält einen Eingang 1 für das Multiplexsignal MS, ein Schieberegister 2, einen Demultiplexer 3, Kanalausgänge 4a - 4d, eine Rahmenkennungswort-Erkennungseinrichtung 5, eine Synchronisierlogik 6, einen Hilfs-Rahmenzähler 7, einen Haupt-Rahmenzähler 8 mit Taktausgängen $8_1$ bis $8_m$, eine Taktrückgewinnungseinrichtung 9, eine Bitschlupf-Erkennungseinrichtung 10, eine Taktfrequenzumschaltung 11 und ein UND-Gatter 12. Der Schaltungsteil 1 bis 8 ist Stand der Technik. Die Taktausgänge $8_1$ bis $8_m$ sind mit nicht dargestellten Baugruppen für Taktanpassung, Stopfkennungs-Auswertung und Auskopplung des Meldeworts verbunden.

Wird an den Eingang 1 das Multiplexsignal MS angelegt, dann gelangt dieses zunächst in das Schieberegister 2 und anschließend in den Demultiplexer 3. Letzterer bewirkt eine richtige Verteilung der Signale ims Multiplexsignals MS auf die Kanalausgänge 4a bis 4d. Die Rahmenkennungswort-Erkennungseinrichtung 5 besteht aus einem Gatternetzwerk, das den Inhalt des Schieberegisters 2 über die Ausgänge $2_0$ bis $2_n$ empfängt und bei Erkennung eines Rahmenkennungsworts RKW an seinem Ausgang 5a einen Impuls abgibt. Bei Verlust der Synchronität setzt dieser Impuls über die Synchronisierlogik 6, deren Ausgang 6c sowie den Eingang 7a den Hilfs-Rahmenzähler 7, dessen Zähldauer einem Multiplex-Pulsrahmen entspricht. Dieser Hilfs-Rahmenzähler 7 gibt jeweils nach einer Pulsrahmendauer an seinem Synchronimpulsausgang 7b einen Synchronimpuls zu dem Zeitpunkt ab, zu dem ein weiteres Rahmenkennungswort RKW erwartet wird. Ist ein drittes Rahmenkennungswort RKW zeitrichtig empfangen worden, dann werden von der Synchronisierlogik 6 über deren Ausgang 6b bei durchgeschaltetem UND-Gatter 12 der Haupt-Rahmenzähler 8 über seinen Eingang 8a synchronisiert. Dieser Haupt-Rahmenzähler 8 wird hierzu in eine bestimmte Zählstellung gebracht. Die Synchronisierlogik 6 übernimmt die Zählung sowohl von nicht erkannten als auch von richtig empfangenen Rahmenkennungswörtern RKW. Die Auswertung erfolgt bei Synchronismus durch einen Synchronimpuls am Synchronimpuls-Ausgang 8b des Haupt-Rahmenzählers 8. Liegt dagegen kein Synchronismus vor, erfolgt die Auswertung der nicht erkannten Rahmenkennungswörter RKW durch die Synchronimpulse am Ausgang 7b des Hilfs-Rahmenzählers 7. Im synchronen Zustand treten die Synchronimpulse an den Synchronimpulsausgängen 7b und 8b sowie der Impuls am Ausgang 5a in einer vorgegebenen Zeitrelation - im Regelfall zeitgleich - auf.

Der erfindungsgemäße weitere Schaltungsteil ergänzt die bis jetzt beschriebene Synchronisiereinrichtung nach dem Stand der Technik für den Fall, daß die Rahmenzähler 7 und 8 als Folge eines Bitschlupfes (bit-slip) des Multiplexsignals MS am Eingang 1 asynchron wurden. Die Impulse an den Ausgängen 5a, 7b und 8b liegen dann nicht mehr in der vorgegebenen Zeitrelation.

Wie bereits bekannt, wird dann der Hilfs-Rahmenzähler 7 über einen Impuls am Ausgang 6c neu gesetzt und führt zusammen mit der Synchronisierlogik 6 den Synchronisier-Algorithmus aus. Der Haupt-Rahmenzähler 8 läuft währenddessen unbeeinflußbar weiter. Nach Ablauf des Synchronisier-Algorithmus sind der Hilfs-Rahmenzähler 7 und die Synchronisierlogik 6 im synchronen Zustand.

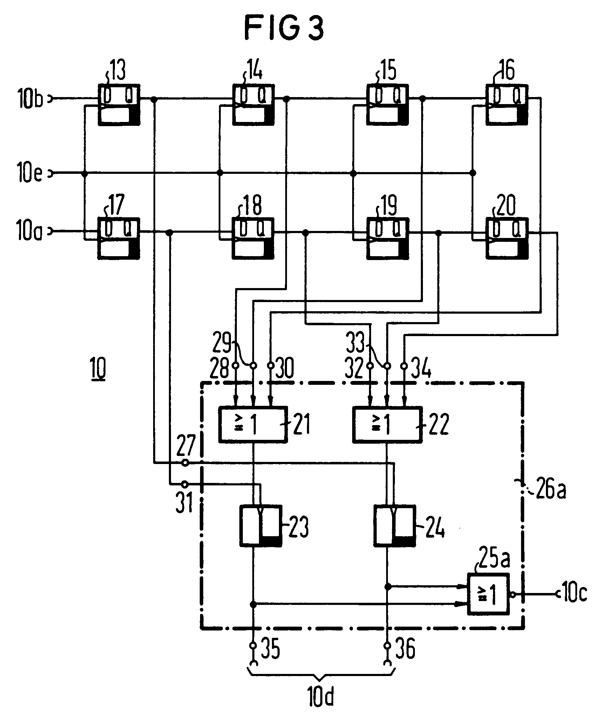

Erfindungsgemäß wird jetzt in der Bitschlupf-Erkennungseinrichtung 10, die in Fig. 3 detailliert dargestellt ist, der zeitliche Abstand t der Synchronimpulse an ihren Eingängen 10a und 10b gemessen. Überschreitet der zeitliche Abstand t einen bestimmten Wert $t_0$ - ein bis mehrere Taktperioden am Takteingang 10e - erfolgt die Synchronisierung des Haupt-Rahmenzählers 8 wie bei der bekannten Synchronisiereinrichtung. Bleibt der zeitliche Abstand t innerhalb der Zeit $t_0$, so geht die Bitschlupf-Erkennungsschaltung 10 in den Zustand "Bitschlupf" über. In diesem Zustand gibt der Ausgang 10c eine logische "0" an das UND-Gatter 12 und sperrt damit den Eingang 8a des Haupt-Rahmenzählers 8.

Liegt der Impuls am Eingang 10a zeitlich vor dem Impuls am Eingang 10b, dann wird die Taktfrequenzumschaltung 11 über den Ausgang 10d auf "langsam" geschaltet. Der Takt am Takteingang 8c des Haupt-Rahmenzählers 8 hat dann eine langsamere Frequenz als der Takt am Ausgang 9b der Taktrückgewinnungseinrichtung 9.

Liegt der Impuls am Eingang 10a zeitlich nach dem Impuls am Eingang 10b, dann wird die Taktfrequenzumschaltung 11 über den Ausgang 10d auf "schnell" geschaltet. Der Takt am Takteingang 8c hat dann eine höhere Frequenz als der Takt am Eingang 11c der Taktfrequenzumschaltung 11.

Dadurch läuft der Haupt-Rahmenzähler 8 langsamer oder schneller als der Hilfs-Rahmenzähler 7 und die Synchronimpulse an den Ausgängen 8b und 7b beginnen sich zeitlich zu nähern, bis nach einiger Zeit eine zeitliche Übereinstimmung erreicht ist. Sobald die Bitschlupf-Erkennungseinrichtung 10 diese Übereinstimmung erkennt, geht sie wieder in ihren Ausgangszustand zurück. An ihrem Ausgang 10c erscheint ein logischer Zustand "1", wodurch die Verbindung von der Synchronisierlogik 6 zum Eingang 8a des Haupt-Rahmenzählers 8 wieder wirksam wird. Der Ausgang 10d der Bitschlupf-Erkennungseinrichtung 10 geht in den Ruhezustand über und die Frequenz des Taktes am Eingang 8c des Hauptrahmenzählers 8 wird wieder gleich der Frequenz des Taktes am Eingang 11c der Taktfrequenzumschaltung 11. Ab diesem Zustand sind die Bitschlupf-Erkennungseinrichtung 10 und die Taktfrequenzumschaltung 11 nicht mehr wirksam.

Fig. 3 zeigt eine erste Variante einer Bitschlupf-Erkennungsschaltung 10 für $t_0$ = drei Perioden des Taktes am Ausgang 10e. Sie enthält ein erstes Schieberegister mit D-Flipflops 13 - 16, ein zweites Schieberegister mit D-Flipflops 17 - 20 und eine Auswertelogik 26a. Diese enthält wiederum ODER-Gatter 21 und 22, D-Flipflops 23 und 24 sowie ein NOR-Gatter 25a. Von der Bitschlupf-Erkennungseinrichtung 10 führen über diesen Ausgang 10d zwei Steuerleitungen zur Taktfrequenzumschaltung 11.

Im synchronen Zustand treten die Pulse an den Eingängen 10a und 10b zeitgleich auf. Die Dauer der Impulse an den Eingängen 10a und 10b sind jeweils gleich einer Periode des Taktes am Takteingang 10e. Die Ausgänge 27 - 30 bzw. 31 - 34 der D-Flipflops 13 - 16 bzw. 17 - 20 gehen während des Durchschiebens der Pulse von den Anschlüssen 10a und 10b jeweils hintereinander für eine Taktperiode auf logisch "1".

Im synchronen Zustand erhalten die Stufenausgänge 27 und 31 gleichzeitig den logischen Zustand "1". Die Stufenausgänge 28 - 30 und 32 - 34 haben in diesem Zeitpunkt den logischen Zustand "0". Die Ausgänge 35 und 36 sind daher kontinuierlich im Zustand logisch "0".

Ist im asynchronen Zustand der Zeitabstand t größer als drei Taktperioden, dann sind zu den Zeitpunkten, an denen die Anschlüsse 27 oder 31 auf den logischen Zustand "1" gehen, die Ausgängen 35 und 36 ebenfalls in einem Zustand logisch "0".

Ist im asynchronen Zustand t kleiner oder höchstens gleich drei Taktperioden, ergeben sich zwei Fälle:

Erscheint der Puls am Eingang 10b zeitlich vor dem Puls am Eingang 10a, dann ist der Zustand an einem der Anschlüsse 28,29 oder 30 logisch "1", während der Zustand am Anschluß 31 auf logisch "1" geht. Am Ausgang 10d, Anschluß 35 geht der Zustand daraufhin auf logisch "1" und schaltet damit die Taktfrequenzumschaltung 11 auf "schnell".

Kommt der Puls am Eingang 10a dagegen zeitlich vor dem Puls am Eingang 10b, dann ist der Zustand an erneute Anschlüsse 32,33 oder 34 logisch "1", während der Zustand am Anschluß 27 auf logisch "1" geht. Der Zustand am Ausgang 10d, Anschluß 36 geht daraufhin auf logisch "1" und schaltet dann die Taktfrequenzumschaltung 11 auf "langsam".

Sobald die Impulse an den Eingängen 10a und 10b zeitgleich sind, nehmen die Ausgänge 35 und 36 einen Zustand logisch "0" an. Der Zustand am Ausgang 10c ist immer ann logisch "0", wenn einer der Ausgänge 10d auf logisch "1" liegt.

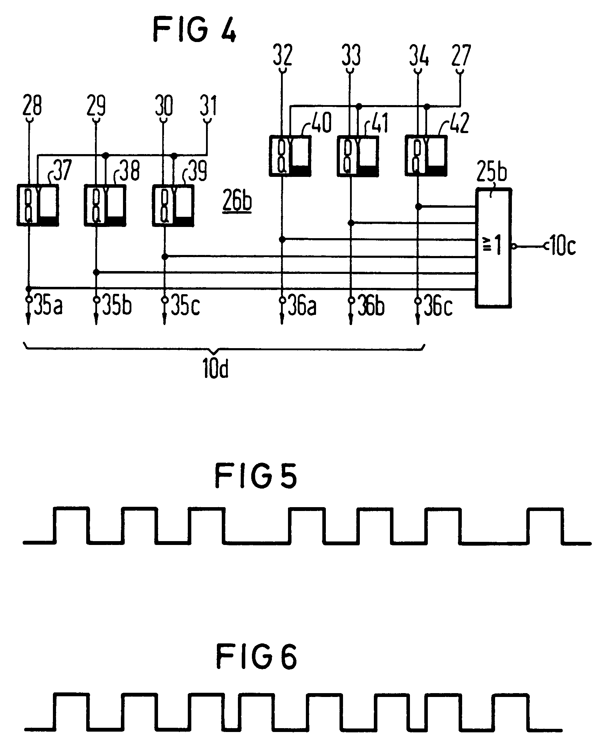

Fig. 4 zeigt für die Bitschlupf-Erkennungseinrichtung 10 eine andere Auswertelogik 26b. Diese enthält D-Flipflops 37 - 42 und ein NOR-Gatter 25b. Über die D-Flipflops 37-39 und die zugehörigen Ausgänge 35a bis 35c erfolgt eine Taktbeschleunigung von einer, zwei oder drei Perioden. Über die D-Flipflops 40-42 und die zugehörigen Ausgänge 36a bis 36c verzögert sich der Takt um eine, zwei oder drei Perioden. Der Takt am Takteingang 8c des Haupt-Rahmenzählers 8 kann innerhalb einer Rahmendauer zügig richtiggestellt werden.

Die Figuren 5 und 6 zeigen die Arbeitsweise der Taktfrequenzumschaltung 11. In Fig. 5 erfolgt eine Taktverlangsamung und in Fig. 6 eine Taktbeschleunigung jeweils durch Taktinvertierung. Einmal ist der Takt im Mittel langsamer und einmal im Mittel schneller als der Originaltakt. Dies wird durch den Zeitpunkt der Invertierung bestimmt.

**Patentansprüche**

1. Synchronisiereinrichtung für einen Digitalsignal-Demultiplexer (3) mit einem dem Demultiplexer (3) vorgeschalteten eingangsseitig angeordneten Schieberegister (2), mit einer an die Stufenausgänge ($2_0$-$2_n$) des Schieberegisters (2) angeschlossenen Rahmenkennnungswort-Erkennungseinrichtung (5), mit einem Hilfs-Rahmenzähler (7), mit einem Haupt-Rahmenzähler (8) und mit einer Synchronisierlogik (6), die den Hilfs-Rahmenzähler (7) im synchronen Zustand bei jedem empfangenen Rahmenkennungswort (RKW) setzt und dies bei einem unklaren Zustand fortsetzt, die bei viermaliger Nichterkennung des Rahmenkennungswortes (RKW) an erwarteter Stelle nach einem Suchlauf den Haupt-Rahmenzähler (8) bei Erkennung eines Rahmenkennungsworts (RKW) an beliebiger Stelle setzt und die den Demultiplexer (3) nur bei anschließender Nichtübereinstimmung der Zählerstände von Hilfs- und Haupt-Rahmenzählern (7,8) neu synchronisiert,
**dadurch gekennzeichnet,**
daß ein UND-Gatter (12) vorgesehen ist, das mit seinem ersten Eingang und seinem Ausgang in eine Steuerleitung zwischen der Synchronisierlogik (6) und dem Haupt-Rahmenzähler (8) eingeschleift ist,
daß eine Bitschlupf-Erkennungseinrichtung (10) vorgesehen ist, die von der Synchronisierlogik (6) sowie von dem Hilfs- und Haupt-Rahmenzähler (7,8) über Synchronimpulseingänge (10a,10b) gesteuert wird und deren erster Ausgang (10c) mit dem zweiten Eingang des UND-Gatters (12) verbunden ist,
daß eine Taktfrequenzumschaltung (11) vorgesehen ist, deren Eingang (11a) mit dem zweiten Ausgang (10d) der Bitschlupf-Erkennungseinrichtung (10) verbunden ist und deren Ausgang (11b) mit dem Takteingang (8c) des Haupt-Rahmenzählers (8) verbunden sind, und daß eine Taktrückgewinnungseinrichtung (9) vorgesehen ist, deren Eingang (9a) mit dem Eingang (1) des Schieberegisters (2) und dessen Ausgang (9b) mit den Takteingängen (7c,10e,11c) der Bitschlupf-Erkennungseinrichtung (10), des Hilfs-Rahmenzählers (7) und der Taktfrequenzumschaltung (11) verbunden sind.

2. Synchronisiereinrichtung nach Anspruch 1,
**dadurch gekennzeichnet,**
daß in der Bitschlupf-Erkennungseinrichtung (10), den Synchronimpulseingängen (10a,10b) je ein vierstufiges Schieberegister (13-16;17-20) nachgeschaltet ist, deren Stufeneingänge mit einer Auswertelogik (26a,26b) verbunden sind, die die Ausgänge (10c,10d) aufweist.

3. Synchronisiereinrichtung nach Anspruch 2,
**dadurch gekennzeichnet,**
daß in der Auswertelogik (26a) ein erstes (21) und ein zweites (22) ODER-Gatter, deren Eingänge jeweils mit den Ausgängen der zweiten bis vierten Stufe jeweils eines Schieberegisters (13-16;17-20) verbunden sind, zwei D-Flipflops (23,24), deren D-Ausgang mit dem Ausgang jeweils des ersten (21) bzw. zweiten (22) ODER-Gatters und deren Q-Ausgang mit dem zweiten Ausgang (10d) verbunden sind, und ein NOR-Gatter (25a) vorgesehen sind, dessen zwei Eingänge jeweils mit einem Q-Ausgang der D-Flipflops (23,24) und dessen Ausgang mit dem ersten Ausgang (10c) der Bitschlupf-Erkennungseinrichtung (10) verbunden sind.

4. Synchronisiereinrichtung nach Anspruch 2,

**dadurch gekennzeichnet,**

daß in der Auswertelogik (26b) zweimal drei D-Flipflops (37-39;40-42), deren D-Eingänge jeweils mit den Ausgängen der zweiten bis vierten Stufe jeweils eines Schieberegisters (13-16;17-20) deren Q-Ausgänge mit dem zweiten Ausgang (10d) und deren Takteingänge jeweils mit dem Ausgang der ersten Stufe der Schieberegister (13-16;17-20) verbunden sind, und daß ein NOR-Gatter (25b) vorgesehen ist, dessen Eingänge jeweils mit einem Q-Ausgang der D-Flipflops (37-42) und dessen Ausgang mit dem ersten Ausgang der Bitschlupf-Erkennungseinrichtung (10) verbunden sind.

## Claims

1. Synchronising device for a digital signal demultiplexer (3),
   having a shift register (2) connected upstream of the demultiplexer (3) on the input side,
   having a frame alignment signal recognition device (5) connected to the stage outputs ($2_0$-$2_n$) of the shift register (2),
   having an auxiliary frame counter (7),
   having a main frame counter (8),
   and having a synchronising logic unit (6), which sets the auxiliary frame counter (7) in the synchronous state for each frame alignment signal (RKW) received and continues this in the case of an unclear state, which, in the event of non-recognition of the frame alignment signal (RKW) four times at the expected position, sets the main frame counter (8) after a search operation when a frame alignment signal (RKW) is recognised at an arbitrary position, and which only resynchronises the demultiplexer (3) if the counter readings of auxiliary and main frame counters (7, 8) subsequently do not match,
   characterised in that an AND gate (12) is provided, which is looped with its first input and its output into a control line between the synchronising logic unit (6) and the main frame counter (8), in that a bit slip recognition device (10) is provided, which is controlled by the synchronising logic unit (6) and also by the auxiliary and main frame counters (7, 8) via synchronising pulse input: (10a, 10b) and the first output (10c) of which is connected to the second input of the AND gate (12), in that a clock frequency switchover device (11) is provided, the input (11a) of which is connected to the second output (10d) of the bit slip recognition device (10) and the output (11b) of which is connected to the clock input (8c) of the main frame counter (8), and in that a timing recovery device (9) is provided, the input (9a) of which is connected to the input (1) of the shift register (2) and the output (9b) of which is connected to the clock inputs (7c, 10e, 11c) of the bit slip recognition device (10), of the auxiliary frame counter (7) and of the clock frequency switchover device (11).

2. Synchronising device according to Claim 1, characterised in that in the bit slip recognition device (10), there is connected downstream of the synchronising pulse inputs (10a, 10b) in each case a four-stage shift register (13-16; 17-20), the stage inputs of which are connected to an evaluation logic unit (26a, 26b), which has the outputs (10c, 10d).

3. Synchronising device according to Claim 2, characterised in that there are provided in the evaluation logic unit (26a) a first (21) and a second (22) OR gate, the inputs of which are connected in each case to the outputs of the second to fourth stage of one shift register (13-16; 17-20) in each case, two D flip-flops (23, 24), the D input of which is connected to the output of in each case the first (21) or second (22) OR gate and the Q output of which is connected to the second output (10d), and a NOR gate (25a), the two inputs of which are connected in each case to one Q output of the D flip-flop (23, 24) and the output of which is connected to the first output (10c) of the bit slip recognition device (10).

4. Synchronising device according to Claim 2, characterised in that there are provided in the evaluation logic unit (26b) two times three D flip-flops (37-39; 40-42), the D inputs of which are connected in each case to the outputs of the second to fourth stage of in each case one shift register (13-16; 17-20), the Q outputs of which are connected to the second output (10d) and the clock inputs of which are connected in each case to the output of the first stage of the shift registers (13-16; 17-20), and in that a NOR gate (25b) is provided, the inputs of which are connected in each case to a Q output of the D flip-flops (37-42) and the output of which is connected to the first output of the bit slip recognition device (10).

## Revendications

1. Dispositif de synchronisation pour un démultiplexeur de signaux numériques (3), comportant un registre à décalage (2) disposé côté entrée et branché en amont du démultiplexeur (3),
   un dispositif (5) d'identification d'indicatifs de trames, raccordé aux sorties ($2_0$-$2_n$) des étages

du registre à décalage (2),

un compteur auxiliaire de trames (7),

un compteur principal de trames (8), et

une unité logique de synchronisation (6), qui règle le compteur auxiliaire de trames (7) à l'état synchrone lors de chaque mot caractéristique de trame (RKW) reçu et maintient ceci dans le cas d'un état non évident, et qui, dans le cas où le mot caractéristique de trame (RKW) n'est pas identifié à quatre reprises à l'emplacement attendu, règle après un cycle de recherche le compteur principal de trames (8) en un emplacement quelconque lors de l'identification d'un mot caractéristique de trame (RKW), et qui synchronise à nouveau le démultiplexeur (3) uniquement dans le cas d'une non coïncidence ultérieure des états de comptage du compteur auxiliaire et du compteur principal de trames (7,8), caractérisé par le fait

qu'il est prévu une porte ET (12), qui est insérée en boucle par sa première entrée et sa sortie dans une ligne de commande entre l'unité logique de synchronisation (6) et le compteur principal de trames (8),

qu'il est prévu un dispositif (10) d'identification de glissement de bits, qui est commandé par l'unité logique de synchronisation (6) ainsi que par le compteur auxiliaire et le compteur principal de trames (7,8) par l'intermédiaire d'entrées d'impulsions de synchronisation (10a,10b) et dont la première sortie (10c) est raccordée à la seconde entrée de la porte ET (12),

qu'il est prévu un circuit de commutation de la fréquence de cadence (11), dont l'entrée (11a) est raccordée à la seconde sortie (10d) du dispositif (10) d'identification du glissement de bits et dont la sortie (11b) est raccordée à l'entrée de cadence (8c) du compteur principal de trames (8), et

qu'il est prévu un dispositif (9) de récupération de cadence, dont l'entrée (9a) est raccordée à l'entrée (1) du registre à décalage (2) et dont la sortie (9b) est raccordée aux entrées de cadence (7c,10c,11c) du dispositif (10) d'identification du glissement de bits, du compteur auxiliaire de trames (7) et du circuit de commutation de la fréquence de cadence (11).

2. Dispositif de synchronisation suivant la revendication 1, caractérisé par le fait

que dans le dispositif (10) d'identification du glissement de bits, en aval des entrées d'impulsions de synchronisation (10a,10b) sont branchés respectivement des registres à décalage à quatre étages (13-16; 17-20), dont les entrées des étages sont raccordées à une unité logique d'évaluation (26a, 26b), qui comporte les sorties (10c,10d).

3. Dispositif de synchronisation suivant la revendication 2, caractérisé par le fait

que dans l'unité logique d'évaluation (26a), une première porte OU (21) et une seconde porte OU (22), dont les entrées sont raccordées respectivement aux sorties des second, troisième et quatrième étages respectivement d'un registre à décalage (13-16; 17-20), il est prévu deux bascules bistables de type D (23,24), dont l'entrée (D) est raccordée à la sortie respectivement de la première porte OU (21) ou de la seconde porte OU (22) et dont la sortie (Q) est raccordée à la seconde sortie du dispositif (2), et qu'il est prévu une porte NON-OU (25a), dont deux entrées sont raccordées respectivement à une sortie Q de la bascule bistable de type D (23,24) et dont la sortie est raccordée à la première sortie (10c) du dispositif (10) d'identification du glissement de bits.

4. Dispositif de synchronisation suivant la revendication 2, caractérisé par le fait que dans l'unité logique d'évaluation (26b), il est prévu deux fois trois bascules bistables de type D (37-39; 40-42), dont les entrées D sont raccordées respectivement aux sorties des second, troisième et quatrième étages respectivement d'un registre à décalage (13-16; 17-20), dont les sorties (Q) sont raccordées à la seconde sortie (10d) et dont les entrées de cadence sont raccordées respectivement à la sortie du premier étage des registres à décalage (13-16; 17-20), et qu'il est prévu une porte NON-OU (25b), dont les entrées sont raccordées respectivement à une sortie Q de la bascule bistable de type D (37-42) et dont la sortie est raccordée à la première sortie du dispositif (10) d'identification du glissement de bits.

FIG 1

FIG 2

# FIG 3

## FIG 4

## FIG 5

## FIG 6